# EUROPÄISCHE PATENTSCHRIFT

(11) **EP 2 376 776 B1**
(45) Veröffentlichungstag und Bekanntmachung des Hinweises auf die Patenterteilung: **07.08.2019**
(21) Anmeldenummer: 09807491.7
(22) Anmeldetag: 16.12.2009
(51) Int. Cl.: F03D 9/00, H02K 7/18

(54) **GENERATOR FÜR EINE WINDENERGIEANLAGE UND VERFAHREN ZU SEINER HERSTELLUNG**
GENERATOR FOR A WIND ENERGY INSTALLATION AND METHOD FOR ITS PRODUCTION
GÉNÉRATRICE POUR UNE INSTALLATION ÉOLIENNE ET PROCÉDÉ POUR SA PRODUCTION

(30) Priorität: 18.12.2008 DE 102008063783
(43) Veröffentlichungstag der Anmeldung: 19.10.2011
(73) Patentinhaber: wind-direct GmbH, 68161 Mannheim (DE)
(72) Erfinder: JÖCKEL, Stephan, 66121 Saarbrücken (DE)
(74) Vertreter: Bernhardt, Reinhold
(86) Internationale Anmeldenummer: PCT/DE2009/001794
(87) Internationale Veröffentlichungsnummer: WO 2010/069300

(56) Entgegenhaltungen:
- WO-A2-2008/021401
- DE-A1- 4 402 184

## Beschreibung

Die Erfindung betrifft eine Windenergieanlage umfassend einen Flügelrotor und einen Generator mit einem Permanentmagnete aufweisenden Rotor, der in direkter Antriebsverbindung mit dem Flügelrotor der Windenergieanlage steht, und mit einem Stator, der einen geblechten, d.h. aus Blechteilen bestehenden Eisenkern umfasst.

Generatoren getriebeloser Windenergieanlagen, deren Durchmesser mehr als 5 m betragen kann, unterliegen vielfältigen, die Genauigkeit des Generatorluftspalts beeinträchtigenden Einflüssen. Damit verbundene Minderungen der Spaltflussdichte führen zu verringerten Drehmomenten und Verlusten an erzeugter Elektroenergie. Ferner besteht die Gefahr von Reibkontakten zwischen Rotor und Stator.
Nicht zuletzt bedingt durch die großen Generatorabmessungen bestehen erhebliche Probleme, die starken Magnetkräften ausgesetzten Teile des Eisenkerns unter genauer Einhaltung der Luftspaltgeometrie an Ort und Stelle zu halten. Die Herstellung herkömmlicher solcher Generatoren erfordert daher einen hohen Aufwand hinsichtlich genauer Bearbeitung von Halterungsteilen und Qualitätskontrolle.

Aus der DE 44 02 184 A1 geht eine getriebelose Windenergieanlage mit einem Generator hervor, der einen Außenrotor aufweist, welcher direkt an den Flügelrotor gekoppelt ist und ein ringförmiges, innenseitig Permanentmagnete aufnehmendes Trägergehäuse umfasst.
Die WO 2008/021401 beschreibt eine elektrische Maschine mit einem Innenrotor und einer den Innenrotor ringförmig umgebendem Stator, der aus geschichteten Blechteilen gebildete Segmente aufweist. Jedes Segment aus geschichteten Blechteilen ist zweiteilig ausgebildet, wobei die beiden Teile miteinander verklebt sind.

Der Erfindung liegt die Aufgabe zugrunde, eine neue Windenergieanlage der eingangs erwähnten Art zu schaffen, die sich bei präziser Einhaltung der Luftspaltabmessungen mit geringerem Aufwand als nach dem Stand der Technik herstellen lässt.

Die diese Aufgabe lösende Windenergieanlage nach der Erfindung ist dadurch gekennzeichnet, dass der Rotor ein Innenrotor ist und der Stator einen den Rotor umgebenden Außenring bildet, dass der Generator ohne ein den Stator am äußeren Umfang des Generators vollständig umschließendes Trägergehäuse ausgebildet ist und dass der Stator einen Versteifungsring auf seiner einer Grundplatte abgewandten Seite umfasst und der Eisenkern zwischen dem Versteifungsring und der Grundplatte angeordnet und der Versteifungsring mit der Grundplatte über mehrere gegen den Eisenkern außen anliegende axiale Träger sowie den Eisenkern durchsetzende axiale Bolzen verbunden ist, dass der ringförmige Stator über die Grundplatte starr mit einem von einem Achskörper vorstehenden Ringflansch verbunden ist und dass die Blechteile des Stators durch Verklebung miteinander verbunden sind.

Erfindungsgemäß übernimmt der geblechte Eisenkern mit den untereinander verbundenen Blechteilen selbst eine für die genaue Einhaltung der Luftspaltgeometrie maßgebende Tragfunktion. Aufwendige Halteeinrichtungen für den Eisenkern entfallen. Das Generatorgewicht ist reduziert.

Gemäß der Erfindung handelt es sich bei dem Rotor um einen Innenläufer, und der Stator bildet einen den Rotor umgebenden Außenring. Vorteilhaft kann der Eisenkern des Stators außenseitig weitgehend frei liegen und unmittelbar durch die Außenluft gekühlt werden. Zweckmäßig weist der Eisenkern auf seiner Außenseite Kühlrippen auf, die einstückig mit ihm verbunden sind.

Gemäß der Erfindung ist der geblechte Eisenkern zwischen einer dem Flügelrotor abgewandten Grundplatte und einem dem Flügelrotor zugewandten, zu der Grundplatte und dem geblechte Eisenkern koaxialen Versteifungsring angeordnet und die Grundplatte und der Versteifungsring sind über mehrere axiale, am Außenumfang des Eisenkerns anliegende Träger verbunden. Im Übrigen liegt der Eisenkern, wie oben erwähnt, außenseitig frei und kann direkt gekühlt werden. Vorteilhafterweise besteht der Eisenkern aus zwei Arten unterschiedlicher geformter Blechsegmente. Im Aktivbereich besitzen die Blechsegmente axiale Schlitze (Nuten und Zähne) für die Aufnahme der Spulen der Statorwicklung. Im Wickelkopfbereich fehlen die Statorzähne, so dass die Spulenenden Platz finden. Dadurch lassen sich die Grundplatte und der Versteifungsring konstruktiv sehr einfach gestalten.

In weiterer Ausgestaltung der Erfindung weist die Grundplatte eine zur Drehachse des Rotors koaxiale Durchtrittsöffnung für einen den Rotor und den Flügelrotor aufnehmenden Achsträger mit einem gegen den Rand der Öffnung anlegbaren Befestigungsflansch auf.

Vorzugsweise bestehen die Permanentmagnete statt aus einem Seltenerd-Material (z.B. NeFeB) aus einem weitaus kostengünstigeren Ferritmaterial, wobei auch für den Rotor ein geblechter Eisenkern mit durch Verklebung oder/und Verschweißung miteinander verbundenen Blechteilen vorgesehen ist.

Zweckmäßig sind die Blechteile des Rotors ferner durch axiale Bolzen miteinander verbunden.

In einer besonders bevorzugten Ausführungsform der Erfindung ist der Stator und ggf. der Rotor mehrteilig, insbesondere zweiteilig mit Hälftenteilen, ausgebildet.

Vorteilhaft ist ein Hälftenteil des Stators und ein Hälftenteil des Rotors platzsparend ineinander verschachtelt und transportierbar, wobei sie stabil miteinander verbunden sein können, u.a. durch Kraftwirkung der Permanentmagnete des Rotors.

In weiterer Ausgestaltung der Erfindung besteht der Eisenkern des Stators und ggf. des Rotors aus aneinandergesetzten und geschichteten Blechsegmenten, wobei sich die Blechsegmente aufeinanderfolgender Blechlagen überlappen.

Zweckmäßig erfolgt eine konzentrierte Bewicklung des Eisenkerns, d.h. die auf die Zahl der Pole und Phasen bezogene Anzahl der Wicklungsschlitze des geblechten Eisenkerns ist kleiner als 1, wobei die Anzahl der Wicklungen minimiert und eine Überlappung von Phasenanschlüssen vermieden ist. Dadurch ist einerseits die Gefahr von Erd- oder Phasenschlüssen minimiert, andererseits wird eine Teilung des Stators wesentlich erleichtert.

In weiterer Ausgestaltung der Erfindung können die Generatorwicklungen statt aus Kupfer aus Aluminiumdraht bestehen.

Zur Herstellung des vorangehend beschriebenen Generators wird ein Verfahren, welches nicht zur vorliegenden Erfindung gehört vorgeschlagen, das dadurch gekennzeichnet ist, dass die Teile des Stators einschließlich der Blechsegmente in eine den Eisenkern außenseitig begrenzende, hochgenaue Aufspannvorrichtung eingelegt, untereinander und mit der Aufspannvorrichtung verbunden und gemeinsam mit der Aufspannvorrichtung einem Press- und Imprägniervorgang sowie einer Wärmebehandlung unterzogen werden, wobei die Wärmebehandlung der Verbindung der Teile oder/und der Lösung von Verspannungen zwischen den Teilen dient.

Die Lösung von Verspannungen durch die Wärmebehandlung kommt insbesondere in Betracht, wenn zusätzlich zu den Teilen des Stators auch die Teile des Rotors in die genannte Aufspannvorrichtung eingebracht werden und wie die Teile des Stators mit der Aufspannvorrichtung verarbeitet werden, wobei die Teile des Stators und ggf. Rotors untereinander, ggf. durch gesonderte Verbindungsstücke, verschweißt werden. Durch die Wärmebehandlung werden dann bei der Verschweißung erzeugte Verspannungen beseitigt.

In einer anderen Ausführungsform des Verfahrens, welches nicht zur vorliegenden Erfindung gehört, werden die Teile des Rotors in eine gesonderte Aufspannvorrichtung eingebracht und wie die Teile des Stators unter Ausrichtung an der Aufspannvorrichtung verarbeitet.

Vorzugsweise werden die mit der betreffenden Aufspannvorrichtung verbundenen Teile des Stators und ggf. des Rotors mit einem Klebemittel/Harz imprägniert und das Klebemittel/Harz bei der Wärmebehandlung gehärtet. Ein bekanntes Verfahren zur Imprägnierung elektrischer Maschinen ist das Vakuumtränken, wie es beispielsweise in der DE 102 15 461 A1 beschrieben ist. Hierbei dringt das Klebemittel/Harz bis in kleinste Spalte ein und benetzt die Fläche zwischen den Blechteilen vollständig. Bei einem anderen bekannten Verfahren zum Verkleben von Blechpaketen erfolgt eine vorherige Beschichtung der Blechteile entweder mit Backlack oder mit einem duroplastischen Klebstoff (siehe z.B. DE 31 103 39 C2) und anschließendes Verpressen und Wärmezufuhr.

Zweckmäßig werden die den Eisenkern bildenden, aneinander gesetzten und geschichteten Blechsegmente vor/während der Verbindung mit der Aufspannvorrichtung durch einen axialen Bolzen oder eine gesonderte Presseinrichtung zusammengepresst.

In weiterer Ausgestaltung der Erfindung bestehen sowohl das Blechpaket des Stators als auch des Rotors aus mehreren, voneinander getrennten Segmenten, die separat verklebt sind, wobei die Anzahl der Segmente mindestens zwei, vorzugsweise jedoch zwölf oder achtzehn beträgt.

Die geblechten Segmente des Stators können axiale Versteifungsrippen als Versteifungselemente enthalten, die vorzugsweise aus Press- oder Ziehprofilen bestehen und insbesondere über Federkräfte in die Segmente einklinkbar sind.

Die geblechten Segmente des Rotors können eingeklebte oder/und verschweißte Stege bzw. Platten als Versteifungselemente enthalten, an die sich nach innen die versteifende Rotorträgerkonstruktion anschließt, die vorzugsweise Verstellelemente zur Einstellung eines möglichst kleinen Luftspalts aufweist.

Vorzugsweise sind sowohl die Stator- als Rotorsegmente am Generator derart befestigt, dass sie im Reparaturfall einzeln radial nach außen von dem im Übrigen in der Windenergieanlage verbleibenden Generator abnehmbar sind.

Vorzugsweise ist der Stator im Reparaturfall von einem einen Grundrahmen bildenden Achskörper lösbar und mit dem Rotor verbindbar, so dass er sich mit Hilfe des Antriebsmoments des Rotors in eine zur Entnahme des Segments geeignete Position, in der das zu entnehmende Segment vorzugsweise ganz oben liegt, drehbar ist.

In weiterer Ausgestaltung des nicht zur Erfindung gehörenden Herstellungsverfahrens werden die mit der betreffenden Aufspannvorrichtung verbundenen Teile des Stators vor der Imprägnierung mit den Wicklungen versehen, und das Verkleben der Bleche und die Imprägnierung der Wicklungen in einem Arbeitsgang vollzogen.

Die mit der betreffenden Aufspannvorrichtung verbundenen beschichteten Blechteile des Stators können auch vor dem Verkleben mit separat z.B. durch ein Harz verfestigten Wicklungen bestückt werden, so dass das Verkleben der Bleche und das Verkleben der Wicklungen in den Nuten mit den Blechen durch austretenden Klebstoff in einem Arbeitsgang vollzogen wird, wobei eine Imprägnierung im Harzbad komplett entfallen kann.

Die mit der betreffenden Aufspannvorrichtung verbundenen Teile des Rotors können vor einer Imprägnierung mit den Permanentmagneten bestückt werden, so dass das Verkleben der Bleche und Einkleben der Magnete in das Blechpaket in einem Arbeitsgang vollzogen wird.

Insbesondere können die mit der betreffenden Aufspannvorrichtung verbundenen beschichteten Blechteile des Rotors vor ihrer Verklebung mit den Permanentmagneten bestückt werden, so dass das Verkleben der Bleche und das Einkleben der Permanentmagnete in Magnettaschen durch austretenden Klebstoff in einem Arbeitsgang vollzogen wird und eine Imprägnierung im Harzbad komplett entfallen kann.

Die Erfindung wird nachfolgend anhand eines Ausführungsbeispiels und der beiliegenden, sich auf dieses Ausführungsbeispiel beziehenden Zeichnungen weiter erläutert. Es zeigen:
- Fig. 1: eine Teildarstellung einer Windenergieanlage mit einem erfindungsgemäßen Generator,
- Fig. 2: eine vergrößerte Teildarstellung der Ansicht von Fig. 1,
- Fig. 3: einen in dem erfindungsgemäßen Generator von Fig. 1 verwendeten Stator,
- Fig. 4: eine Teilansicht des Stators von Fig. 3,
- Fig. 5 und 6: die Anordnung von Rotor und Stator zu Transportzwecken erläuternde Darstellung,
- Fig. 7 und 8: die Herstellung von Rotor und Stator des Generators von Fig. 1 erläuternde Darstellungen, und
- Fig. 9: eine den Imprägniervorgang von Rotor und Stator erläuternde Darstellung,
- Fig. 10 bis 12: geschnittene Teildarstellungen einer Windenergieanlage mit einem zweiten Ausführungsbeispiel für einen erfindungsgemäßen Generator,
- Fig. 13: den Kopfteil der Windenergieanlage von Fig. 10 bis 12 in perspektivischer Ansicht schräg von hinten,
- Fig. 14: ein Rotorsegment der Windenergieanlage von Fig. 10 bis 13 in perspektivischer Darstellung, und
- Fig. 15 und 16: Detaildarstellungen des Rotorsegments von Fig. 14.

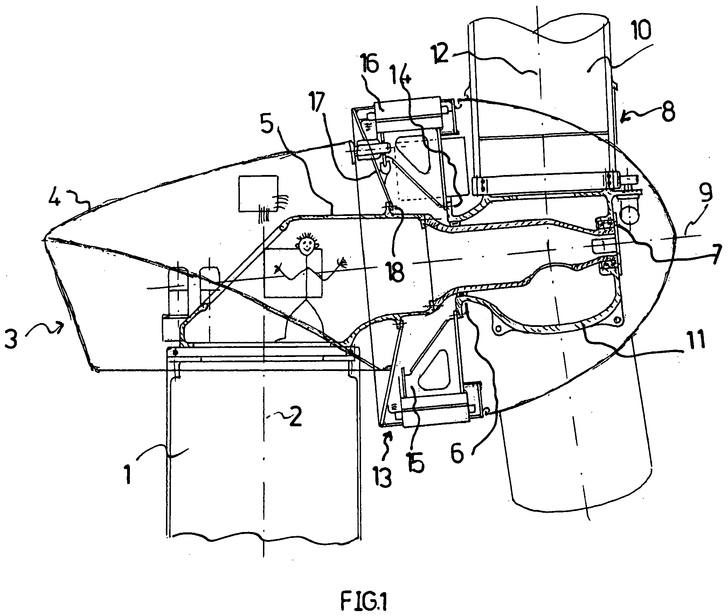

Eine in Fig. 1 ausschnittsweise dargestellte Windenergieanlage weist eine auf einem Turm 1 um eine Achse 2 dem Wind nachführbare Gondel 3 mit einem Gondelgehäuse 4 und einem in dem Gondelgehäuse 4 angeordneten Achskörper 5 auf.

Auf dem um die Achse 2 schwenkbaren Achskörper 5 ist bei 6 und 7 ein Flügelrotor 8 um eine Achse 9 drehbar gelagert. Rotorblätter 10 des Flügelrotors 8 sind mit einer Nabe 11 um eine zu der Drehachse 9 etwa senkrechte Achse 12 selbst drehbar verbunden.

Unmittelbar an den Flügelrotor 8 schließt sich ein Generator 13 an, dessen Rotor 15 über einen Flansch 14 der Nabe 11 in direkter Antriebsverbindung mit dem Flügelrotor 8 steht.

Der Rotor 15 bildet einen Innenrotor und ist von einem ringförmigen Stator 16 umgeben, der über eine Grundplatte 17 und einen von dem Achskörper 5 vorstehenden Ringflansch 18 starr mit dem Achskörper 5 verbunden ist.

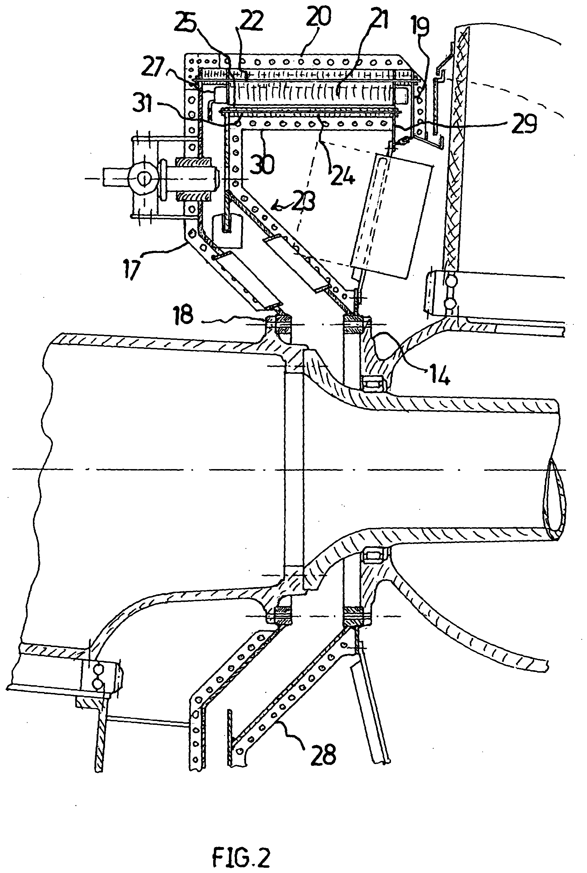

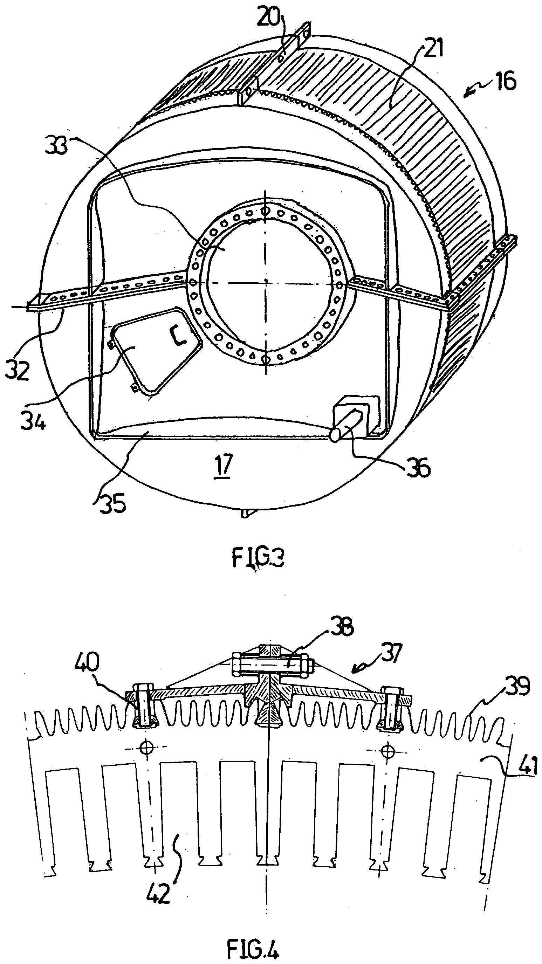

Wie Fig. 2 deutlicher zeigt, umfasst der Stator 16 auf seiner der Grundplatte 17 abgewandten Seite einen Versteifungsring 19, der über mehrere axiale Träger 20 mit der Grundplatte 17 verbunden ist. Zwischen der Grundplatte 17 und dem Versteifungsring 19 ist ein außenseitig gegen die Träger 20 anliegender geblechten Eisenkern 21 angeordnet, der über den Eisenkern durchsetzende axiale Bolzen 22 mit der Grundplatte 17 und dem Versteifungsring 19 verbunden ist.
Der Eisenkern 21 weist in Fig. 4 sichtbare axiale Schlitze für die Aufnahme der Spulen einer Statorwicklung 27 auf. Vorteilhaft weist der Eisenkern 21 zwei Arten unterschiedlich geformter Blechsegmente auf. Im elektro-magnetisch aktiven Teil besitzen die Blechsegmente axiale Schlitze (Nuten und Zähne) für die Aufnahme der Spulen der Statorwicklung 27. In den Wickelkopfbereichen vor und hinter dem aktiven Teil fehlen die Statorzähne, so dass die Spulenenden Platz finden. Dadurch lassen sich die Grundplatte 17 und der Versteifungsring 19 konstruktiv sehr einfach gestalten, weil keine zylindrischen Bauteile geformt und bearbeitet werden müssen.

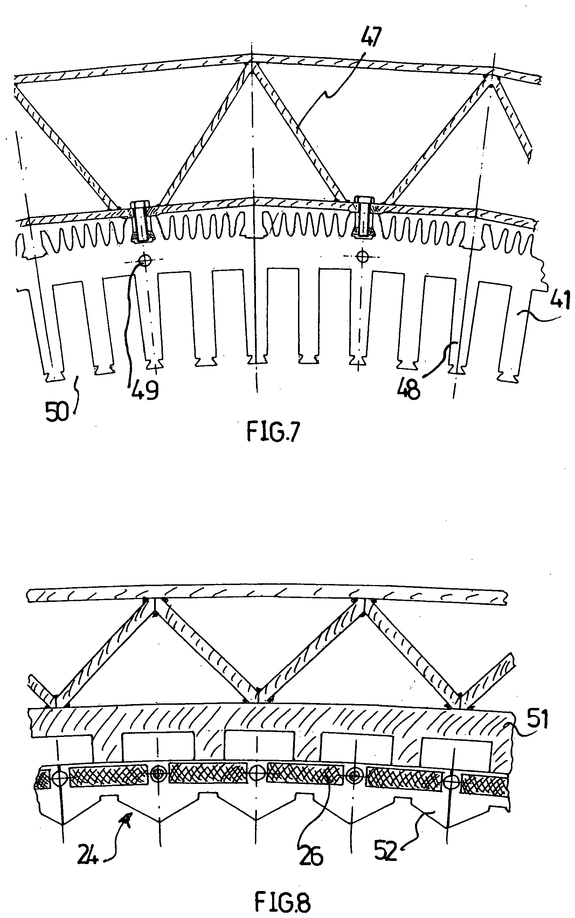

Der Rotor 15 umfasst einen auf einer Tragstruktur 23 gehaltenen, geblechten Eisenkern 24, in den in Haltetaschen angeordnete, an einen Luftspalt 25 des Generators 13 angrenzende Permanentmagnete 26 (Fig. 8) aus Ferritmaterial eingeschoben sind. Die Tragstruktur 23 umfasst neben einer Grundplatte 28 einen Versteifungsring 29 und axiale Träger 30, die innenseitig gegen den ringförmigen Eisenkern 24 anliegen. Den Eisenkern 24 durchsetzt ein Bolzen 31, der ihn mit der Grundplatte 28 und dem Versteifungsring 29 verbindet.

Wie die den Stator 16 gesondert zeigende Fig. 3 erkennen lässt, ist der Stator 16 in Hälften unterteilt, die über einen Flansch 32 miteinander verbindbar sind. In der Grundplatte 17 ist neben einer zentralen Durchtrittsöffnung 33 für den Achskörper 5 eine Öffnung gebildet, die durch eine Klappe 34 verschließbar ist. Eine solche Öffnung befindet sich auch in der Grundplatte 28 des Rotors 15. Die Grundplatte 17 weist ferner eine umlaufende Verstärkungsrippe 35 auf. Bei 36 ist ein Arretierungsbolzen für den Rotor vorgesehen.

Fig. 4 zeigt eine Verbindungseinrichtung 37 für den zweigeteilten Eisenkern 21. Eine Schraubverbindung 38 hält den Eisenkern zusammen. Wie Fig. 4 ferner erkennen lässt, weist der Eisenkern auf seiner Außenseite Rippen 39 auf, die der Kühlung dienen. In regelmäßigen Abständen sind zwischen Rippen 39 hinterschnittene Nuten 40 gebildet, in welche Teile der Verbindungseinrichtung 37 eingreifen können. Entsprechend ist eine ähnliche Verbindungseinrichtung auch bei Teilung des Eisenkerns des Rotors erforderlich, dort jedoch, da es sich um einen Innenrotor handelt, auf der Innenseite.

Der Eisenkern 21 ist aus Blechsegmenten 41 zusammengesetzt, welche Ausnehmungen 42 für die Bildung von Nuten für die Aufnahme der Statorwicklung 27 aufweisen.

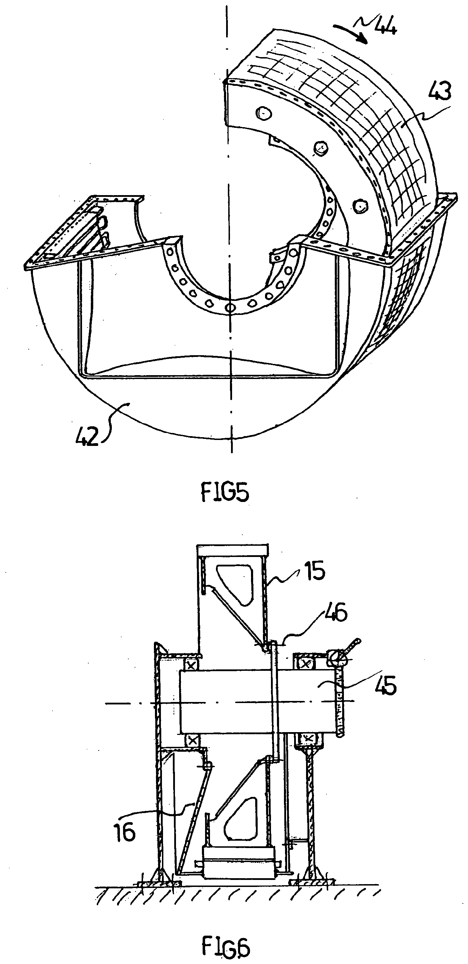

Auch der Rotor 15 lässt sich in Hälften zerlegen und die Hälften von Rotor und Stator lassen sich zu Transportzwecken ineinander verschachteln, wie dies in Fig. 5 gezeigt ist. Zur Verschachtelung wird eine Rotorhälfte 43 gemäß Pfeil 44 um 180° in eine Statorhälfte hineingedreht. Hierzu dient eine in Fig. 6 gezeigte Drehvorrichtung mit einem Drehkörper 45 und einem Befestigungsflansch 46 für den Rotor.

Im Folgenden wird unter Bezugnahme auf die Figuren 7 und 8 die Herstellung des vorangehend beschriebenen Generators 13 erläutert.

Die Grundplatte 17 des Stators 16 wird in eine topfartige Aufspannvorrichtung 47 eingelegt und daran befestigt. Der Durchmesser der Aufspannvorrichtung entspricht genau dem Außendurchmesser des Eisenkerns 21 des Stators 16.

Unter Ausrichtung an der Aufspannvorrichtung 47 wird dann der Eisenkern 21 aus den Blechsegmenten 41 zusammengesetzt. Die Blechsegmente 41 einer Blechlage stoßen bei 48 aneinander an. Von Lage zu Lage überlappen sich die Blechsegmente, die geometrisch so gestaltet sind, dass sich dabei durch die Ausnehmungen 42 über den Umfang gleichmäßig verteilte Aufnahmenuten 50 für die Statorwicklung 27 ergeben.
Wenn die gewünschte Stapeldicke erreicht ist, werden die Segmente durch die Bolzen 22 unter Nutzung von Durchgangslöchern 49 miteinander verbunden und zwischen der Grundplatte 17 und dem Versteifungsring 19 zusammengepresst. Zum Zusammenpressen könnten auch gesonderte Presseinrichtungen verwendet werden.
Nach erfolgter Einbringung von Statorwicklungen in die gebildeten Nuten 50 wird die gesamte aus der Aufspannvorrichtung 47 und den Teilen des Stators bestehende Anordnung mit einem Klebemittel imprägniert, insbesondere in ein Klebemittel eingetaucht, wobei ggf. durch Sogwirkung eines Vakuums dafür gesorgt wird, dass das Klebemittel zwischen die Blechsegmente und in die Zwischenräume zwischen den Wicklungen 27 und Wänden der Nuten 50 gelangt.

Die imprägnierte Anordnung wird dann in einem Ofen wärmebehandelt, wobei es zur Härtung des Klebemittels und einer festen Verklebung zwischen den Statorteilen kommt. Nach Trennung des Stators von der Aufspannvorrichtung erfolgt eine Endlackierung oder Pulverbeschichtung.

Zur Herstellung des Rotors 15 wird eine Aufspannvorrichtung 51 eingesetzt, wie sie ausschnittsweise in Fig. 8 dargestellt ist. Im Prinzip laufen hier die gleichen Arbeitsgänge wie bei der Herstellung des Stators 16 ab. Der Eisenkern 24 wird aus Blechsegmenten 52 zusammengesetzt und die Permanentmagnete 26 werden in die gebildeten Taschen des Blechpakets eingeführt.

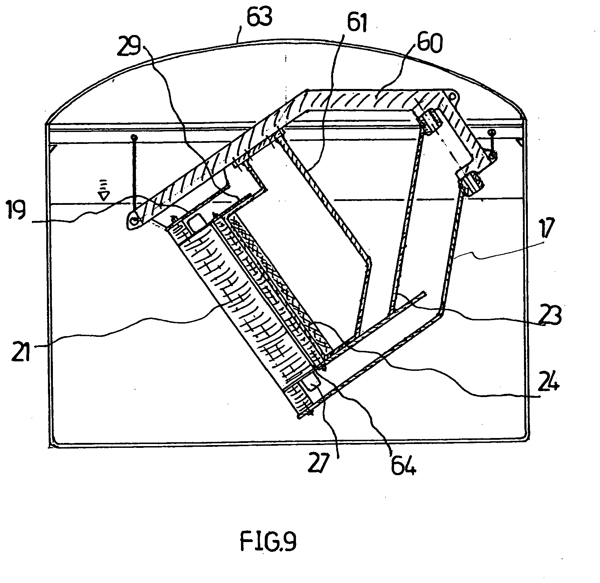

Fig. 9 zeigt eine gemeinsame Imprägnierung, vorzugsweise unter Vakuum, von Stator 16 und Rotor 15, aufgespannt auf einer gemeinsamen Aufspannvorrichtung 60. Diese Aufspannvorrichtung 60 besitzt ein verschiebbares Innenteil 61, mit dem der Rotor-Eisenkern 24, die Rotorgrundplatte 23 und der Versteifungsring 29 verbunden sind und das später eine einfache Demontage von Stator 16 und Rotor 15 zwecks Lackierung erlaubt. In den Luftspalt ist eine maßgenaue, z.B. mit Teflon beschichtete Distanzplatte 64 eingebracht, die nach dem Fertigungsschritt leicht entfernbar ist. Der Stator-Eisenkern 21 wird durch die Magnetkräfte des Rotors 15 maßgenau gehalten. Der Imprägniervorgang findet in einem teilweise mit Harz gefüllten, druckfesten Behälter 63 statt.

Durch die Herstellung von Stator 16 und Rotor 15 in der beschriebenen Weise unter Nutzung der Aufspannvorrichtungen 47,51 entstehen hochgenaue, weitgehend selbsttragende Bauteile. Entsprechend hoch ist die Genauigkeit des Luftspalts 25.

In den nachfolgenden Figuren sind gleiche oder gleichwirkende Teile mit derselben Bezugszahl wie in den vorangehenden Figuren bezeichnet, wobei der betreffenden Bezugszahl jeweils der Buchstabe a beigefügt ist.

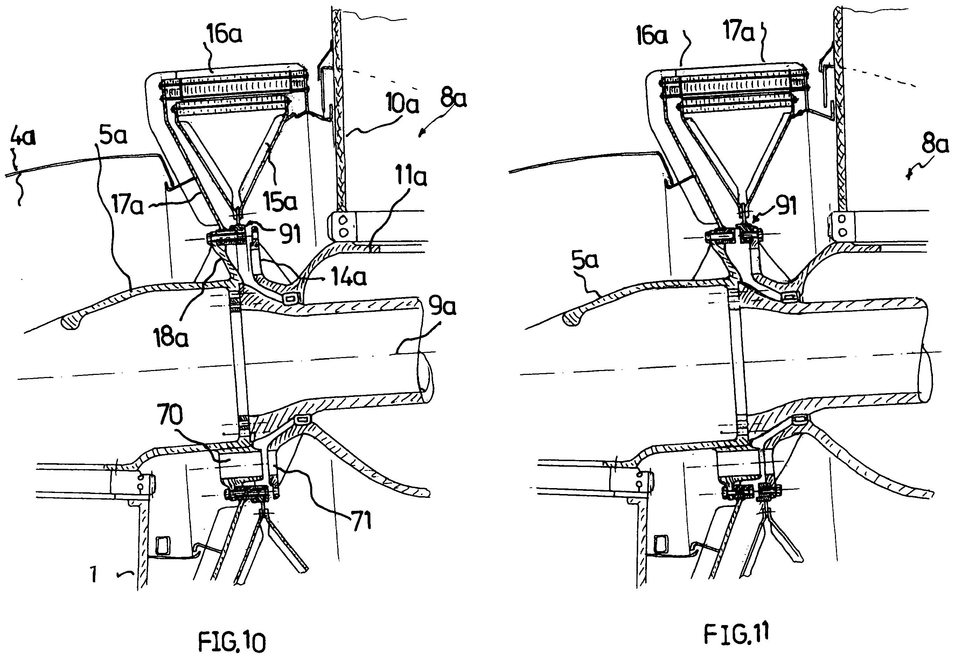

Eine in den Figuren 10 bis 12 in geschnittener Teilansicht dargestellte Windenergieanlage mit einem Flügelrotor 8a und einem Achskörper 5a umfasst eine Einrichtung zur Arretierung des Flügelrotors 8a, wobei diese Einrichtung eine mit dem Achskörper 5a verbundene Hülse 70 für die Aufnahme eines Arretierungsbolzens und eine Öffnung 71 in einem Flansch 14a einer Nabe 11a des Flügelrotors 8a aufweist.

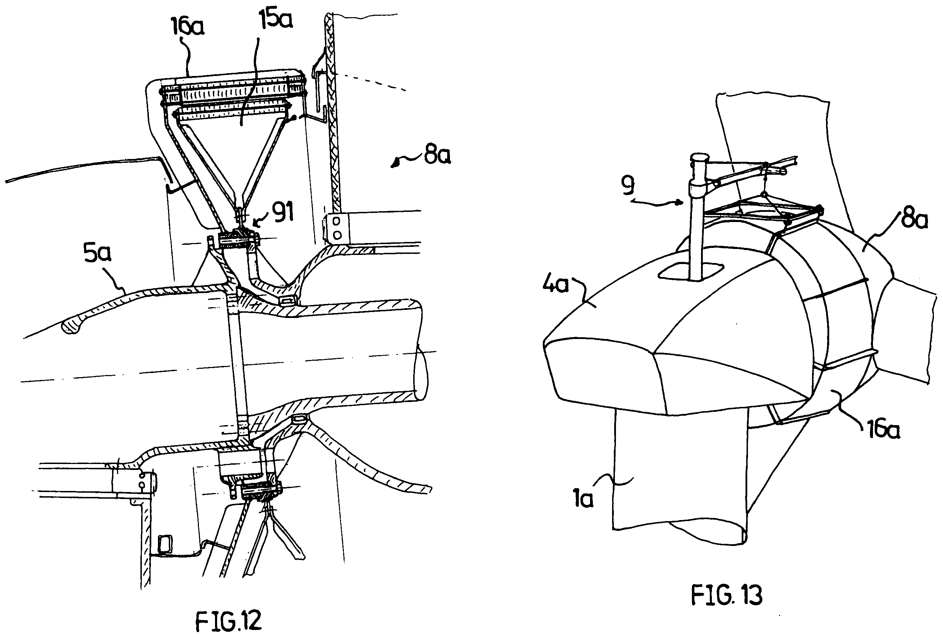

Mit dem Flansch 14 gemäß Fig. 11 über eine Schraubverbindungseinrichtung 91 verbindbar ist ein innerhalb eines Stators 16a drehbarer Rotor 15a. Gemäß Fig. 10 lässt sich der Rotor mit dem Stator und der mit dem Rotor verbundene Stator über die Schraubverbindungseinrichtung 91 seinerseits mit dem Flansch 18a verbinden. Wie aus Fig. 12 hervorgeht, können über die Schraubverbindungseinrichtung 91 ferner der Stator mit dem Rotor und der mit dem Stator verbundene Rotor seinerseits mit dem Flansch 14a der Nabe 11a des Flügelrotors 8a verbunden werden.

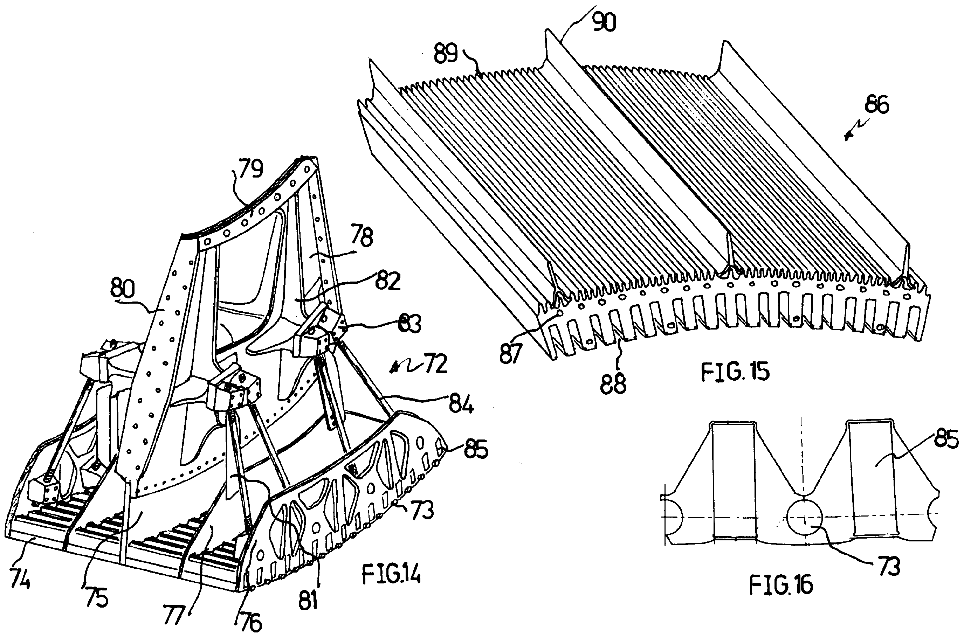

Sowohl der Stator 16a als auch der Rotor 15a besteht aus Segmenten. Figur 14 zeigt ein Rotorsegment 72. Es umfasst ein durch Bolzen 73 zusammengehaltenes Blechpaket 74 mit einem plattenförmigen Mittelsteg 75 und Außenstegen 76. Jeweils zwischen dem Mittelsteg und den Außenstegen ist in das Blechpaket ein plattenförmiger Zwischensteg 77 eingebunden.

Der Mittelsteg 75 geht in eine Trägerkonstruktion 78 über. Ein dem Blechpaket 74 abgewandtes Endstück 79 der Trägerkonstruktion 78 dient der Verbindung mit dem Flansch 14a. Über zweiseitige Endstücke 80 können die Rotorsegmente 72 untereinander verbunden werden.

Die Zwischenstege 77 sind über Verbindungsstücke 81 jeweils mit einem von der Trägerkonstruktion 78 seitlich vorstehenden Halter 82 verbunden. Zwischen den Außenstegen 76 und den Haltern 82 besteht jeweils eine Verbindung über zwei Gewindestäbe 84, die sich in Halteblöcke 83 einschrauben lassen, welche mit den Haltern 82 bzw. Außenstegen 86 verbunden sind.

Wie insbesondere Fig. 16 erkennen lässt, weisen die Blechpakete 74 sich in axialer Richtung erstreckende Kanäle 85 für die Aufnahme von Permanentmagnetstäben auf. Die Geometrie der die Permanentmagnetstäbe umgebenden Bleche ist derart vorgesehen, dass magnetische Rückschlüsse durch das Weicheisenmaterial der Bleche vermieden sind und der in den Spalt übergehende Magnetfluss optimiert ist.

Ein Blechpaket 86 zur Bildung eines Statorsegments ist in Fig. 15 gezeigt. Die durch Bolzen 87 zusammengehaltenen Bleche bilden Nuten 88 für die Aufnahme von Statorwicklungen.

Auf der den Nuten abgewandten Seite bildet das Blechpaket axiale Rillen 89. In Abständen zueinander sind Rillen mit zusätzlichen Vertiefungen vorgesehen, in denen sich axiale Versteifungsrippen 90 einrasten lassen. Die elastisch über Federkräfte einklinkbaren Versteifungsrippen bestehen vorzugsweise aus Press- oder Ziehprofilen.

Die Einstellelemente bildenden Gewindestäbe 84 erlauben eine präzise Einstellung der Weite des Luftspalts über die gesamte axiale Länge des Rotors.

Im Falle eines defekten Statorsegments lässt sich der Stator 16a gemäß Fig. 12 mit dem Rotor 15a und dem Flügelrotor 8a verbinden und gemeinsam mit diesen Teilen verdrehen, bis das betreffende Segment zu einer in Fig. 13 gezeigten auf der Oberseite des Gondelgehäuses 4a angeordneten Hebeeinrichtung 92 ausgerichtet ist. Das defekte Segment lässt sich in dieser Position aus dem Statorring herausheben.

Ist ein Rotorsegment defekt, so wird zunächst, wie vorangehend beschrieben, ein zu demontierendes Segment des Stators genau zu der Hebeeinrichtung 92 ausgerichtet und der Stator danach gemäß Fig. 11 mit dem Flansch 18a verschraubt. Dann kann das defekte Rotorsegment in eine zu dem bereits ausgerichteten Statorsegment ausgerichtete Position verdreht werden. Aufeinanderfolgend werden dann das Statorsegment und das defekte Rotorsegment durch die Hebeeinrichtung 92 aus dem Statorring bzw. Rotorring herausgehoben.

## Patentansprüche

1. Windenergieanlage umfassend einen Flügelrotor (8) und einen Generator (12) mit einem Permanentmagnete (26) aufweisenden Rotor (15), der in direkter Antriebsverbindung mit dem Flügelrotor (8) der Windenergieanlage steht, und mit einem Stator (16), der einen geblechten Eisenkern (21) umfasst,
**dadurch gekennzeichnet,**
**dass** der Rotor ein Innenrotor ist und der Stator (16) einen den Rotor (15) umgebenden Außenring bildet, dass der Generator (13) ohne ein den Stator (16) am äußeren Umfang des Generators vollständig umschließendes Trägergehäuse ausgebildet ist, dass der Stator (16) einen Versteifungsring (19) auf seiner einer Grundplatte abgewandten Seite umfasst und der Eisenkern (21) zwischen dem Versteifungssring (19) und der Grundplatte (17) angeordnet und der Versteifungsring (19) mit der Grundplatte (17) über mehrere, gegen den Eisenkern (21) außenseitig anliegende axiale Träger (20) sowie den Eisenkern (21) durchsetzende axiale Bolzen (22) verbunden ist, dass der ringförmige Stator (16) über die Grundplatte (17) starr mit einem von einem Achskörper (5) vorstehenden Ringflansch (18) verbunden ist und dass die Blechteile des Stators (16) durch Verklebung miteinander verbunden sind.

2. Windenergieanlage nach Anspruch 1,
**dadurch gekennzeichnet,**
**dass** die Blechteile ferner miteinander verschweißt sind.

3. Windenergieanlage nach Anspruch 1 oder 2,
**dadurch gekennzeichnet,**
**dass** der geblechte Eisenkern (21) in den Wickelkopfbereichen unter Belassung von Freiraum für die Wickelköpfe durch nuten- und zähnefreie Blechsegmente gebildet ist.

4. Windenergieanlage nach Anspruch 2 oder 3,
**dadurch gekennzeichnet,**
**dass** die Grundplatte (17) eine zur Drehachse des Rotors (15) koaxiale Durchtrittsöffnung (33) für einen den Rotor (15) und den Flügelrotor (8) aufnehmenden Achsträger (5) mit einem gegen den Rand der Öffnung anlegbaren Befestigungsflansch (18) aufweist.

5. Windenergieanlage nach einem der Ansprüche 1 bis 4,
**dadurch gekennzeichnet,**
**dass** die Permanentmagnete (26) ein Ferritmaterial aufweisen und vorzugsweise der Rotor (15) einen geblechten Eisenkern (24) mit durch Verklebung und/oder Verschweißung miteinander verbundenen Blechteilen aufweist.

6. Windenergieanlage nach einem der Ansprüche 1 bis 5,
**dadurch gekennzeichnet,**
**dass** die Blechteile des Rotors (15) durch axiale Bolzen (22,31) verbunden sind.

7. Windenergieanlage nach einem der Ansprüche 1 bis 6,
**dadurch gekennzeichnet,**
**dass** der Stator (16) oder/und der Rotor (15) mehrteilig, insbesondere zweiteilig mit Hälftenteilen (42,43), ausgebildet ist bzw. sind.

8. Windenergieanlage nach Anspruch 7,
**dadurch gekennzeichnet,**
**dass** ein Hälftenteil (42,43) des Stators (16) und ein Hälftenteil des Rotors (15) zwecks Transport ineinander geschachtelt miteinander verbindbar sind.

9. Windenergieanlage nach einem der Ansprüche 2 bis 8,
**dadurch gekennzeichnet,**
**dass** der Stator (16) außenseitig mit dem geblechten Eisenkern (21) einstückig verbundene Kühlrippen (39) aufweist.

10. Windenergieanlage nach einem der Ansprüche 1 bis 9,
**dadurch gekennzeichnet,**
**dass** die Blechlagen des Stators (16) und ggf. des Rotors (15) aus aneinandergesetzten und geschichteten Blechsegmenten (41) bestehen, wobei sich die Blechsegmente (41) aufeinanderfolgender Blechlagen überlappen.

11. Windenergieanlage nach einem der Ansprüche 1 bis 10,
**dadurch gekennzeichnet,**
**dass** die auf die Zahl der Pole und Phasen bezogene Anzahl der Wicklungsnuten (50) des geblechten Eisenkerns (21) kleiner als 1 ist, wobei vorzugsweise die Anzahl der Wicklungen minimiert und eine Überlappung von Phasenanschlusssträngen vermieden ist.

12. Windenergieanlage nach einem der Ansprüche 1 bis 11,
**dadurch gekennzeichnet,**
**dass** die Generatorwicklungen aus Aluminiumdraht bestehen.

## Claims

1. Wind energy installation comprising a blade rotor (8) and a generator (12), having a rotor (15) which has permanent magnets (26) and has a direct drive connection to the blade rotor (8) of the wind energy installation, and having a stator (16) which has a laminated iron core (21),
**characterized in that**
the rotor is an internal rotor and the stator (16) forms an outer ring which surrounds the rotor (15), **in that** the generator (13) is formed without a supporting housing which completely surrounds the stator (16) on the external circumference of the generator, **in that** the stator (16) comprises a stiffening ring (19) on its side facing away from a base plate and the iron core (21) is arranged between the stiffening ring (19) and the base plate (17) and the stiffening ring (19) is connected to the base plate (17) via a plurality of axial supports (20), which rest on the outside against the iron core (21), and axial bolts (22) which pass through the iron core (21), **in that** the annular stator (16) is rigidly connected via the base plate (17) to an annular flange (18) which projects from a shaft body (5), and **in that** the laminate parts of the stator (16) are connected to one another by adhesive bonding.

2. Wind energy installation according to Claim 1, **characterized in that**
the laminated parts are furthermore welded to one another.

3. Wind energy installation according to Claim 1 or 2,
**characterized in that**
the laminated iron core (21) is formed in the end winding areas, leaving a space free for the end windings, by means of laminate segments which have no slots and teeth.

4. Wind energy installation according to Claim 2 or 3,
**characterized in that**
the base plate (17) has a through-opening (33), which is coaxial with respect to the rotation axis of the rotor (15), for a shaft carrier (5), which holds the rotor (15) and the blade rotor (8) and has an attachment flange (18) which can be placed against the edge of the opening.

5. Wind energy installation according to one of Claims 1 to 4,
**characterized in that**
the permanent magnets (26) have a ferrite material, and the rotor (15) preferably has a laminated iron core (24) with laminate parts which are connected to one another by adhesive bonding and/or welding.

6. Wind energy installation according to one of Claims 1 to 5,
**characterized in that**
the laminate parts of the rotor (15) are connected by axial bolts (22, 31).

7. Wind energy installation according to one of Claims 1 to 6,
**characterized in that**
the stator (16) or/and the rotor (15) is or are formed from a plurality of parts, in particular two parts with half parts (42, 43).

8. Wind energy installation according to Claim 7, **characterized in that**
a half part (42, 43) of the stator (16) and a half part of the rotor (15) can be connected to one another, interleaved in one another, for transport purposes.

9. Wind energy installation according to one of Claims 2 to 8,
**characterized in that**,
on the outside, the stator (16) has cooling ribs (39) which are integrally connected to the laminated iron core (21).

10. Wind energy installation according to one of Claims 1 to 9,
**characterized in that**
the laminate layers of the stator (16) and if appropriate of the rotor (15) are composed of laminate segments (41) which are placed one next to the other and are layered, with the laminate segments (41) of successive laminate layers overlapping.

11. Wind energy installation according to one of Claims 1 to 10,
**characterized in that**
the number of winding slots (50) of the laminated iron core (21), related to the number of poles and phases, is less than 1, preferably with the number of windings being minimized and with overlapping of phase connection sections being avoided.

12. Wind energy installation according to one of Claims 1 to 11,
**characterized in that**
the generator windings are composed of aluminium wire.

## Revendications

1. Centrale éolienne comprenant un rotor à pales (8) et un générateur (12) avec un rotor (15) ayant des aimants permanents (26), qui est en liaison d'entraînement directe avec le rotor à pales (8) de la centrale éolienne, et avec un stator (16) comprenant un noyau en fer feuilleté (21),
**caractérisée en ce que**
le rotor est un rotor intérieur et le stator (16) forme une bague extérieure entourant le rotor (15), **en ce que** le générateur (13) est formé sans boîtier de support entourant complètement le stator (16) sur la périphérie extérieure du générateur, **en ce que** le stator (16) comprend une bague de rigidification (19) sur son côté détourné d'une plaque de base, et le noyau en fer (21) est disposé entre la bague de rigidification (19) et la plaque de base (17), et la bague de rigidification (19) est reliée à la plaque de base (17) par plusieurs supports axiaux (20) reposant contre le noyau de fer (21) du côté extérieur ainsi que par des boulons axiaux (22) traversant le noyau de fer (21), **en ce que** le stator annulaire (16) est relié rigidement à une bride annulaire (18), dépassant d'un corps d'axe (5), via la plaque de base (17) et **en ce que** les parties en tôle du stator (16) sont reliées les unes aux autres par collage.

2. Centrale éolienne selon la revendication 1,
**caractérisée en ce que**
les parties en tôle sont en outre soudées les unes aux autres.

3. Centrale éolienne selon la revendication 1 ou 2,
**caractérisée en ce que**
le noyau en fer feuilleté (21) est formé par des segments de tôle dépourvus de gorges et de dents dans les zones de tête d'enroulement, en laissant un espace libre pour les têtes d'enroulement.

4. Centrale éolienne selon la revendication 2 ou 3,
**caractérisée en ce que**
la plaque de base (17) présente une ouverture de passage (33) coaxiale à l'axe de rotation du rotor (15) et destinée à un support d'axe (5) recevant le rotor (15) et le rotor à pâles (8) et comprenant une bride de fixation (18) applicable contre le bord de l'ouverture.

5. Centrale éolienne selon l'une des revendications 1 à 4,
**caractérisée en ce que**
les aimants permanents (26) présentent un matériau de ferrite, et de préférence le rotor (15) comprend un noyau en fer feuilleté (24) ayant des parties de tôle reliées les unes aux autres par collage et/ou par soudage.

6. Centrale éolienne selon l'une des revendications 1 à 5,
**caractérisée en ce que**
les parties de tôle du rotor (15) sont reliées par des boulons axiaux (22, 31).

7. Centrale éolienne selon l'une des revendications 1 à 6,
**caractérisée en ce que**
le stator (16) et/ou le rotor (15) est/sont réalisé(s) en plusieurs parties, en particulier en deux parties avec des parties formant moitié (42, 43).

8. Centrale éolienne selon la revendication 7,
**caractérisée en ce que**
une partie formant moitié (42, 43) du stator (16) et une partie formant moitié du rotor (15) sont susceptibles d'être reliées l'une à l'autre en étant mutuellement imbriquées à des fins de transport.

9. Centrale éolienne selon l'une des revendications 2 à 8,
**caractérisée en ce que**
le stator (16) comprend du côté extérieur des ailettes de refroidissement (39) reliées d'un seul tenant au noyau en fer feuilleté (21).

10. Centrale éolienne selon l'une des revendications 1 à 9,
**caractérisée en ce que**
les couches de tôle du stator (16) et le cas échéant du rotor (15) sont constituées par des segments de tôle (41) posés les uns contre les autres et disposés en couches, les segments de tôle (41) de couches de tôle successives se chevauchant.

11. Centrale éolienne selon l'une des revendications 1 à 10,
**caractérisée en ce que**
le nombre de gorges d'enroulement (50), par référence au nombre des pôles et des phases, du noyau en fer feuilleté (21) est inférieur à 1, et de préférence le nombre d'enroulements est minimisé et un chevauchement de brins de raccordement de phase est évité.

12. Centrale éolienne selon l'une des revendications 1 à 11,
**caractérisée en ce que**
les enroulements de générateur sont constitués en fil d'aluminium.
